# EUROPEAN PATENT SPECIFICATION

(11) **EP 4 416 396 B1**
(45) Date of publication and mention of the grant of the patent: **23.04.2025**
(21) Application number: 22744217.5
(22) Date of filing: 20.07.2022
(51) Int. Cl.: F16B 12/26, F16B 12/20, F16B 5/06, F16B 12/60

(54) **SCREWLESS FIXED ASSEMBLY DEVICE**
SCHRAUBENLOSE FESTMONTAGEVORRICHTUNG
DISPOSITIF D'ASSEMBLAGE FIXE SANS VIS

(30) Priority: 30.11.2021 ES 202132380 U
(43) Date of publication of application: 21.08.2024
(73) Proprietor: Fama Sofas, S.L.U., 30510 Yecla (Murcia) (ES)
(72) Inventor: LÓPEZ GIL, Félix, 30510 Yecla (Murcia) (ES); DÍAZ JUAN, Francisco José, 30510 Yecla (Murcia) (ES)
(74) Representative: Ballester Cañizares, Rosalia
(86) International application number: PCT/EP2022/070295
(87) International publication number: WO 2023/099046

(56) References cited:
- WO-A1-2012/095454

## Description

### Technical field of the invention

This invention relates to a screwless fixed assembly connector intended for connecting the armrests of sofas and armchairs to their respective seat bodies, as well as for connecting the modules to form a modular sofa and multiple pieces of wooden furniture.

### State of the prior art

Currently, the vast majority of sofa and armchair armrests are connected to the body by means of two systems. On the one hand, by means of screws that go through drilled holes in the two parts (armrest and body) and which are fastened by nuts on the opposite side. On the other hand, using a leaf spring guide system, which is made up of two parts: a U-shaped part called the female part, which is placed in one of the two parts to be connected (armrests or bodies) and a second part, called the male part, which has different shapes that fit inside the "female" part.

A connector assembly for an article of furniture is known from WO 2012/095454 A1.

This type of connection is generally attached by welding if the part to be connected is made of metal or, if it is placed on wood, by fastening it with screws or similar. This rectangular-shaped part placed on the side board of the body or armrest has considerable strength, but despite this, it has some disadvantages, such as, for example, that when the two parts are metal there is always a little slack between them, which means that the two parts do not fit together perfectly and there always tends to be a slight wobbling movement between the two parts to be connected.

Recently, plastic "male" parts have been designed that avoid this wobbling problem, although the separation between the two lateral parts of the body and armrest still exists and it is not therefore possible to achieve a perfect fit between the two parts.

The second big problem with these systems is that they have very little depth (8 to 10mm) and assembly becomes more difficult as the two male parts have to fit into the two female parts at the same time, avoiding the protrusions that these parts usually have, such as rubber, fibre, upholstery and so on. All of this makes this supposedly simple connecting task very complicated for many end users and even assembly professionals.

In short, the connection of these parts is never as strong as that made with screws and nuts, as there is always a separation that generates small oscillations; and there is an added difficulty when carrying out the assembly as the connecting guides need to be assembled manually therefore to carry out the final assembly.

### Explanation of the invention

One object of the invention is a screwless fixed assembly connector comprising a male part comprising, in turn, a prominent protrusion configured to facilitate the connection between the two parts without having to try to fit together two parts that are practically the same and which, as has been indicated in the state of the prior art, are very difficult to manufacture.

Another object of the invention is that the screwless fixed assembly connector can be inserted into the wooden board or bar of the side of the module or armrest to be connected, so that, when the parts are connected, they are firmly fastened together.

In this invention, moreover, it has been taken into account that machining wood is slower than other materials. For this reason, it has been decided to use a round or oval-shaped part, so that, instead of milling a rectangular part -by drawing the path-, it is only necessary to use a crown (a large diameter mouth). To guarantee the positioning, a second drilled hole has been added in the upper part that guarantees that the position is always the same.

Similarly, an object of this invention is that, by means of this device, it is possible to separate large elements from others with a smaller volume, which facilitates their dispatch and transport, allowing assembly by means of this device as if it were a single part, without having to use any kind of tool to connect them, also entailing relevant savings for the user in transport and assembly.

### Brief description of the drawings

The following is a very brief description of a series of drawings which help to understand the invention better and which relate expressly to one embodiment of the invention, which is illustrated as a non-limiting example thereof.
- FIG. 1: shows the two symmetrical bushings (1) that form part of the screwless fixed assembly connector, which is the object of this invention.
- FIG. 2: shows a view of the screwless fixed assembly connector, which is the object of this invention.

### Detailed description of a practical embodiment of the invention

As has been indicated throughout this description, the object of the invention is to replace the use of screws for fastening the armrests to the body of a sofa or armchair, which requires mechanisation and skilled labour to fit them together.

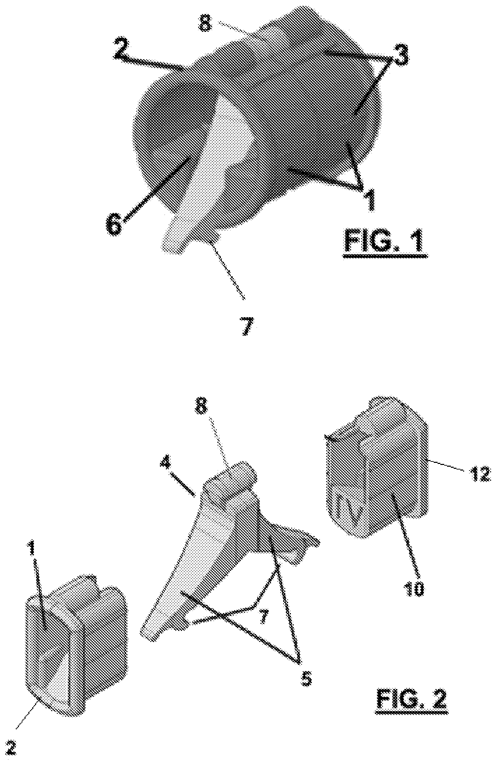

To this end, this invention has developed two practical embodiments, as shown in FIG.1 and FIG.2. In the first embodiment (FIG.1) the invention has two symmetrical bushings 1, comprising a perimeter protrusion 2, as well as grooves 3 in their outer surface. In the second embodiment shown in FIG.2, each bushing 10 (both bushings 10 are also symmetrical in this second embodiment) however, has a quadrangular outer shape, as opposed to the purely circular or oval shape of the first embodiment. In any case, in both embodiments, the bushings (1,10) are configured as a "female" part that is inserted into a drilled hole made in both sides of the sofa or armchair to be connected, and which is inserted from the inner face to the outer face, so that both perimeter crowns (2,12) would be on the inside of the armchair or sofa and, therefore, would be hidden after assembly. An additional advantage of using symmetrical bushings is that, in contrast to most assemblies known in the state of the art, it is not necessary to differentiate between left or right parts of the assembly.

The bushings (1,10) will therefore be facing each other inside the two parts to be connected, so that in order for the assembly to be firmly fastened together, a connector 4 will be used, which we will call the "male" part or element and which has an inverted "Y"-shaped configuration, with two totally symmetrical arms 5, in such a way that both arms 5 of the connector 4 will be located in an internal housing 6 of the bushings (1,10) which is dimensionally adapted to receive each of said arms 5.

The lower part of each of the arms 5, in an area close to its end, the connector 4 comprises two slightly curved tabs 7 dimensionally adapted to be retained in the perimeter crown (2,12) of the bushings (1,10), which serves to achieve a perfect fit that prevents it from slipping out and which allows it to be lifted from the inside to enable the male connector 4 to be unlocked.

Finally, the male connector 4 comprises in its upper part, more specifically in the area where the arms 5 are connected, a protrusion 8 in the upper part, which is an element configured so that the set of bushings (1,10) and the male connector 4 fit together perfectly when the tabs 7 are fastened on their respective crown (2,12). In this way, the bushing-connector assembly cannot be released by accidental movements and the only way to release it is by removing the tab from the lower part.

However, to unlock the parts, as soon as it is unlocked on either side, on the other part, although it is not accessible, it can be released from the outside. It is also possible to unlock it by pulling tightly upwards.

The most important thing about this invention is that this connecting piece protrudes by about two centimetres, this difference is what facilitates the assembly of the two parts (connections on the market are only 8 or 10 mm and are difficult to fit). With this new device, assembly is easier and also a lot stronger.

A fundamental difference can also be that most quick connections are located on the surface to be connected and this is drilled, which we use to strengthen the thickness of the board or sheet that we have drilled.

## Claims

1. A screwless fixed assembly device between two parts of an item of furniture comprising two symmetrical bushings (1,10) configured to be inserted opposite each other in two drilled holes, each of them being located in the furniture parts to be assembled; and wherein both symmetrical bushings (1,10) are assembled by means of a connector (4) with two totally symmetrical arms (5) in an inverted Y-shaped configuration, in such a way that said arms (5) of the connector (4) are configured to be internally housed in the bushings (1,10) one arm (5) per bushing (1,10), both arms (5) of the connector (4) are located in an internal housing (6) of the bushings (1,10) which is dimensionally adapted to receive each of said arms (5);
wherein the screwless fixed assembly device is **characterised in that:**
the lower part of each of the arms (5), in an area close to its end, the connector (4) comprises two slightly curved tabs (7) dimensionally adapted to be retained in a perimeter crown (2,12) of the bushings (1,10); and
**in that** the connector (4) comprises a protrusion (8), placed in the upper part of the area where the arms (5) are connected; and wherein the protrusion (8) is configured to fit together perfectly the set of bushings (1,10) and the connector (4) when the tabs (7) are fastened on their respective crown (2,12).

2. The device according to any of the preceding claims wherein the bushings (1,10) comprise a plurality of grooves (3) on their outer surface.

3. The device according to any of the preceding claims wherein the bushings (1,10) have a circular, oval, or rectangular configuration.

## Patentansprüche

1. Schraubenlose fixierte Anordnungsvorrichtung zwischen zwei Teilen eines Möbelstücks, das zwei symmetrische Buchsen (1,10) umfasst, die dazu ausgelegt sind, einander gegenüberliegend in zwei gebohrte Löcher eingesetzt zu werden, wobei sich jedes davon in den zusammenzusetzenden Möbelteilen befindet; und wobei beide symmetrische Buchsen (1,10) mittels eines Verbinders (4) mit zwei vollständig symmetrischen Armen (5) in einer umgekehrten Y-förmigen Auslegung in einer Weise zusammengesetzt werden, dass die Arme (5) des Verbinders (4) dazu ausgelegt sind, in den Buchsen (1,10) untergebracht zu sein, ein Arm (5) pro Buchse (1,10), sich beide Arme (5) des Verbinders (4) in einem internen Gehäuse (6) der Buchsen (1,10) befinden, das dimensional angepasst ist, jeden der Arme (5) aufzunehmen;
wobei die schraubenlose fixierte Anordnungsvorrichtung **dadurch gekennzeichnet ist, dass:**
der untere Teil von jedem der Arme (5) der Verbinder (4) in einem Bereich nahe seines Endes zwei geringfügig gekrümmte Laschen (7) umfasst, die dimensional angepasst sind, um in einem Umfangsscheitel (2,12) der Buchsen (1,10) gehalten zu werden; und
dadurch, dass der Verbinder (4) einen Vorsprung (8) umfasst, der im oberen Teil des Bereichs platziert ist, in dem die Arme (5) verbunden sind; und wobei der Vorsprung (8) dazu ausgelegt ist, den Satz von Buchsen (1,10) und den Verbinder (4) perfekt zusammenzusetzen, wenn die Laschen (7) an ihrem jeweiligen Scheitel (2,12) befestigt sind.

2. Vorrichtung nach einem der vorhergehenden Ansprüche, wobei die Buchsen (1,10) auf ihrer Außenfläche eine Vielzahl von Nuten (3) umfassen.

3. Vorrichtung nach einem der vorhergehenden Ansprüche, wobei die Buchsen (1,10) eine kreisförmige, ovale oder rechteckige Auslegung aufweisen.

## Revendications

1. Dispositif d'assemblage fixe sans vis entre deux parties d'un élément de meuble comprenant deux douilles (1,10) symétriques configurées pour être insérées à l'opposé l'une de l'autre dans deux trous percés, chacune d'entre elles étant située dans les parties du meuble à assembler ; et dans lequel les deux douilles (1,10) symétriques sont assemblées au moyen d'un raccord (4) avec deux bras totalement symétriques (5) dans une configuration en forme de Y inversé, de telle manière que lesdits bras (5) du raccord (4) sont configurés pour être logés de manière interne dans les douilles (1,10) à raison d'un bras (5) par douille (1,10), les deux bras (5) du raccord (4) sont situés dans un logement interne (6) des douilles (1,10) qui est dimensionnellement adapté pour recevoir chacun desdits bras (5) ;
dans lequel le dispositif d'assemblage fixe sans vis est **caractérisé en ce que** :
la partie inférieure de chacun des bras (5), dans une zone proche de son extrémité, le raccord (4) comprend deux languettes légèrement incurvées (7) dimensionnellement adaptées pour être retenues dans une couronne périmétrique (2,12) des douilles (1,10) ; et
**en ce que** le raccord (4) comprend une saillie (8), placée dans la partie supérieure de la zone où les bras (5) sont reliés ; et dans lequel la saillie (8) est configurée pour s'emboîter parfaitement avec l'ensemble de douilles (1,10) et le raccord (4) lorsque les languettes (7) sont fixées sur leur couronne (2,12) respective.

2. Dispositif selon l'une quelconque des revendications précédentes dans lequel les douilles (1,10) comprennent une pluralité de rainures (3) sur leur surface externe.

3. Dispositif selon l'une quelconque des revendications précédentes dans lequel les douilles (1,10) ont une configuration circulaire, ovale, ou rectangulaire.
